# EUROPÄISCHE PATENTSCHRIFT

(11) **EP 1 053 154 B1**
(45) Veröffentlichungstag und Bekanntmachung des Hinweises auf die Patenterteilung: **29.05.2002**
(21) Anmeldenummer: 99908863.6
(22) Anmeldetag: 09.02.1999
(51) Int. Cl.: B60T 13/57

(54) **BREMSKRAFTVERSTÄRKER FÜR KRAFTFAHRZEUGE**
POWER ASSISTED BRAKE FOR MOTOR VEHICLES
SERVOFREIN POUR VEHICULES AUTOMOBILES

(30) Priorität: 13.02.1998 DE 19805841
(43) Veröffentlichungstag der Anmeldung: 22.11.2000
(73) Patentinhaber: Continental Teves AG & Co. oHG, 60488 Frankfurt (DE)
(72) Erfinder: KRÄMER, Horst, D-63128 Dietzenbach (DE)
(86) Internationale Anmeldenummer: EP9900827
(87) Internationale Veröffentlichungsnummer: WO9941123

(56) Entgegenhaltungen:
- WO-A-94/04403
- DE-A- 3 445 118
- DE-A- 3 915 219
- GB-A- 2 299 384

## Beschreibung

Die Erfindung betrifft einen Bremskraftverstärker für Kraftfahrzeuge mit einem Verstärkergehäuse, dessen Innenraum durch eine bewegliche Wand in eine Unterdruckkammer und eine Arbeitskammer unterteilt ist, sowie einem eine auf die bewegliche Wand einwirkende Druckdifferenz steuernden Steuerventil, das aus mindestens zwei konzentrisch zueinander angeordneten Dichtsitzen sowie einem Ventilkörper besteht.

Ein derartiger Bremskraftverstärker ist z.B. aus der EP 655039 bekannt. Der Ventilkörper dieses Bremskraftverstärkers begrenzt im Steuergehäuse einen pneumatischen Raum, der mit dem in der Arbeitskammer herrschenden pneumatischen Druck beaufschlagbar ist. Zu diesem Zweck ist ein pneumatischer Kanal zwischen dem pneumatischen Raum und der Arbeitskammer vorgesehen, welcher im Bereich einer Dichtfläche des Ventilkörpers angeordnet ist.

Grundsätzlich besitzt der bekannte Bremskraftverstärker ein befriedigendes Betriebsverhalten, weil es der pneumatische Raum ermöglicht, eine Verringerung der Differenz zwischen der Ansprechkraft des Bremskraftverstärkers und der am Ventilkolben wirkenden Rückstellkraft zu erreichen, so daß bei einer gleichbleibenden Ansprechkraft eine Erhöhung der Rückstellkraft oder bei einer gleichbleibenden Rückstellkraft eine Verringerung der Ansprechkraft möglich ist. Somit wird eine Verbesserung der Hysterese des erfindungsgemäßen Bremskraftverstärkers erreicht.

Das grundsätzlich positive Betriebsverhalten des Bremskraftverstärkers erstreckt sich jedoch nicht auf alle Betriebszustände. Beispielsweise besitzt der Ventilkörper bei voll ausgesteuertem Bremskraftverstärker, das heißt bei maximaler Verstärkung, das Bestreben, in dem voll ausgesteuertem Zustand zu verharren, weil die an dem Ventilkörper infolge des pneumatischen Raumes angreifende resultierende Kraft das Abtrennen des Vakuumkanals unterstützt, so daß der Ventilkörper weiterhin in Richtung Dichtsitz gedrückt wird. Der Ventilkörper ist folglich nicht in allen Betriebszuständen vollständig, das heißt ideal, druckausgeglichen.

Aufgabe der vorliegenden Erfindung ist es daher, einen Bremskraftverstärker mit einem ideal druckausgeglichenen Ventilkörper bereitzustellen, welcher einerseits dem steigenden Kostendruck in der Automobilzulieferindustrie Rechnung trägt, wobei also insbesondere die Einzelteile einfach hergestellt und montiert werden können, und wobei andererseits der beschränkte Bauraum effektiv ausgenutzt wird.

Diese Aufgabe wird mit den kennzeichnenden Merkmalen des Patentanspruches 1 dadurch gelöst, daß die von der Durchmesserdifferenz der Dichtlippen beeinflußte wirksame pneumatische Fläche des Raumes im wesentlichen mit der zwischen den beiden Dichtsitzen begrenzten pneumatischen Fläche übereinstimmt.

Mit diesen Merkmalen wird auf einfach herstellbarem Wege ein vollständiger Druckausgleich des Steuerventils bewirkt, ohne auf komplizierte Konstruktionen mit schwierigen Montagevorgängen angewiesen zu sein.

Erfindungsgemäß fluchten die Dichtlippen in axialer Richtung weitgehend mit den Dichtsitzen. Dies bewirkt eine radial platzparende Bauweise und eine geringe Umlenkung der Luftströme bei der Belüftung oder Evakuierung, was ein gutes und schnelles Ansprechverhalten des Bremskraftverstärkers ermöglicht.

Gemäß dem bevorzugten Ausführungsbeispiel ist dem Ventilkörper mit den Dichtlippen ein Führungsteil mit zwei konzentrischen Führungsstutzen zugeordnet. Jede der Dichtlippen beaufschlagt federnd eine Kontaktfläche eines Stutzens. Diese Maßnahme ist mit dem Vorteil verbunden, daß der Ventilkörper ausschließlich an einem Bauteil in axialer Richtung geführt ist, und nicht wie bei dem Stand der Technik an einem Ventilgehäuse und einem Führungsteil, was eine sehr präzise Fertigung mit engen Toleranzen, infolge Addition der Toleranzfelder erfordert.

Vorteilhafte Ausgestaltungen der Erfindung gehen aus Unteransprüchen im Zusammenhang mit der Beschreibung und der Zeichnung hervor. In der Zeichnung zeigt:
- Fig. 1: einen Bremskraftverstärker nach dem Stand der Technik im Längsschnitt, teilweise weggebrochen;
- Fig. 2: eine Steuergruppe eines weiteren bekannten Bremskraftverstärkers im vergrößerten Maßstab, stark vereinfacht;
- Fig. 3: eine Steuergruppe eines erfindungsgemäßen Bremskraftverstärkers im Schnitt wie in Figur 2.

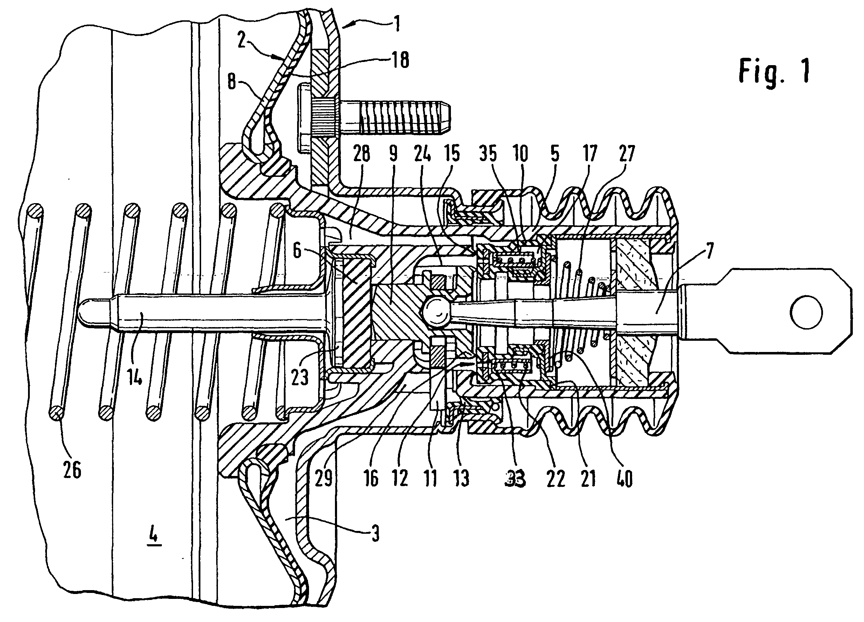

Das in Fig. 1 lediglich schematisch angedeutete Verstärkergehäuse 1 des Bremskraftverstärkers nach dem Stand der Technik ist durch eine axial bewegliche Wand 2 in eine Arbeitskammer 3 und eine Unterdruckkammer 4 unterteilt. Die axial bewegliche Wand 2 besteht aus einem aus Blech tiefgezogenen Membranteller 8 und einer daran anliegenden flexiblen Membran 18, die nicht näher dargestellt zwischen dem äußeren Umfang des Membrantellers 8 und dem Verstärkergehäuse 1 eine Rollmembran als Abdichtung bildet.

Ein durch eine Betätigungsstange 7 betätigbares Steuerventil 12 ist in einem im Verstärkergehäuse 1 abgedichtet geführten, die bewegliche Wand 2 tragenden Steuergehäuse 5 untergebracht und besteht aus einem am Steuergehäuse 5 ausgebildeten ersten Dichtsitz 15, einem an einem mit der Betätigungsstange 7 verbundenen Ventilkolben 9 ausgebildeten zweiten Dichtsitz 16 sowie einem mit beiden Dichtsitzen 15,16 zusammenwirkenden Ventilkörper 10, der mittels einer sich an einem Haltering 21 abstützenden Ventilfeder 22 gegen die Ventilsitze 15,16 gedrückt wird. Die Arbeitskammer 3 ist mit der Unterdruckkammer 4 über einen seitlich im Steuergehäuse 5 verlaufenden Kanal 28 verbindbar.

Die Bremskraft wird über eine stirnseitig am Steuergehäuse 5 anliegende gummielastische Reaktionsscheibe 6 sowie eine einen Kopfflansch 23 aufweisende Druckstange 14 auf einen Betätigungskolben eines nicht dargestellten Hauptzylinders der Bremsanlage übertragen, der am unterdruckseitigen Ende des Bremskraftverstärkers angebracht ist. Die an der Betätigungsstange 7 eingeleitete Eingangskraft wird auf die Reaktionsscheibe 6 mittels des Ventilkolbens 9 übertragen.

Eine in der Zeichnung schematisch dargestellte Rückstellfeder 26, die sich an der unterdruckseitigen Stirnwand des Verstärkergehäuses 1 an einem nicht gezeigten Flansch abstützt, hält die bewegliche Wand 2 in der gezeigten Ausgangsstellung. Außerdem ist eine zweite Druckfeder 27 vorgesehen, die zwischen der Betätigungsstange 7 und einem am Haltering 21 anliegenden, den Ventilkörper 10 am Haltering 21 sichernden Abstützring 40 angeordnet ist und deren Kraft für eine Vorspannung des Ventilkolbens 9 bzw. seines Ventilsitzes 16 gegenüber dem Ventilkörper 10 sorgt.

Um die Arbeitskammer 3 bei der Betätigung des Steuerventils 12 mit der Atmosphäre verbinden zu können, ist schließlich im Steuergehäuse 5 ein annähernd radial verlaufender Kanal 29 ausgebildet. Die Rückkehrbewegung des Ventilkolbens 9 am Ende eines Bremsvorganges wird dabei durch ein Querglied 11 begrenzt, das in der in der Zeichnung gezeigten Lösestellung des Bremskraftverstärkers an einem das Steuergehäuse 5 im Verstärkergehäuse 1 abgedichtet führenden Gleitdichtring 13 anliegt.

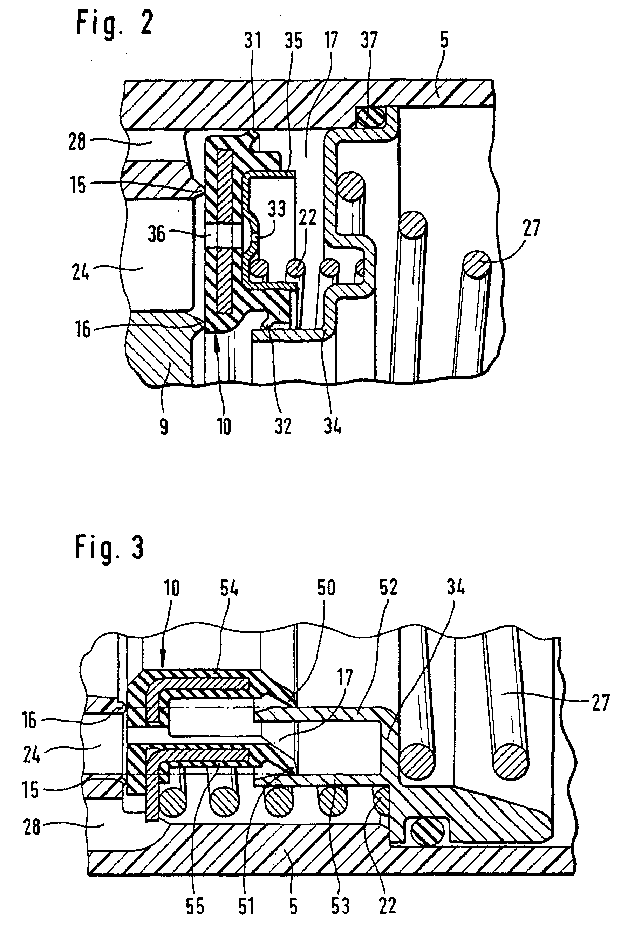

Bei der einen weiteren Stand der Technik detaillierter zeigenden Fig. 2 befindet sich der Ventilkörper in der Lösestellung. Der Ventilkörper 10 ist ringförmig ausgebildet und weist eine radiale außenliegende, an der Wandung des Steuergehäuses 5 dichtend anliegende erste Dichtlippe 31 sowie eine radial innenliegende zweite Dichtlippe 32 auf, die mit einem den pneumatischen (Druckausgleichs-) Raum 17 begrenzenden Führungsteil 34 zusammenwirkt. Das gegenüber dem Steuergehäuse 5 mittels eines 0-Ringes 37 abgedichtete Führungsteil 34 dient einerseits der Abstützung der Kolbenstangenrückholfeder 27 und andererseits der Abstützung der Ventilfeder 22. Für die Verbindung zwischen dem Druckausgleichsraum 17 und dem Ringraum 24 bzw. der nicht gezeigten Arbeitskammer 3 sorgen ähnlich wie bei Fig. 1 Durchlässe 36 im Ventilkörper 10 sowie Öffnungen 33, die in einem den Ventilkörper 10 versteifenden, im Querschnitt U-förmig gestalteten Versteifungsring 35 den Durchlässen 36 gegenüberliegend ausgebildet sind.

Gleiche oder übereinstimmende Bauteile sind in Figur 3 mit den Bezugsziffern der Figuren 1 und 2 gekennzeichnet und werden nicht weiter erläutert. Wie die Figur zeigt, besitzt der Ventilkörper 10 eine radial innere Dichtlippe 50 und eine radial äußere Dichtlippe 51, und die beiden Dichtlippen sind auf unterschiedlichen Durchmessern angeordnet. Ferner verdeutlichen in der Zeichnung strichpunktiert vorgenommene Hilfslinien, daß jede der Dichtlippen 50,51 in axialer Richtung weitgehend mit jeweils einem der beiden Dichtsitze 16,15 fluchtet. Axial versetzt zu dem Ventilkörper 10 ist diesem ein Führungsteil 34 mit zwei konzentrisch zueinander angeordneten Führungsstutzen 52, 53 zugeordnet und an jedem der Führungsstutzen 52,53 liegt jeweils eine der Dichtlippen 50,51 an einer Kontaktfläche an. Zum Zweck einer vollständigen Führung des Ventilkörpers 10 an beziehungsweise in dem Führungskörper 34 besitzen beide Bauteile einen U-förmigen Querschnitt und die Dichtungslippen 50,51 sind an den Enden von axial abstehenden Schenkeln oder Kragen 54,55 angeordnet. Im einzelnen liegt die radial äußere Dichtlippe 51 zwischen den beiden Führungsstutzen 52,53 und beaufschlagt die Kontaktfläche des äußeren Führungsstutzens 53. Ferner beaufschlagt die radial innere Dichtlippe 50 die Kontaktfläche des ihr zugeordneten radial inneren Führungsstutzens 52. Es bleibt noch hinzuzufügen, daß die beiden Dichtlippen 50,51 in Relation zu den beiden Schenkeln 54,55 schräg nach radial außen abstehen.

Ganz wesentlich für den Druckausgleichseffekt an dem Ventilkörper 10 ist die Anordnung der Dichtlippen 50,51 in Relation zu den Ventilsitzen, so daß die durch die Durchmesserdifferenz zwischen den Dichtlippen 50,51 beeinflusste wirksame pneumatische Fläche des Raumes 17 in axialer Projektionsrichtung im wesentlichen mit der zwischen den beiden Dichtsitzen 15,16 begrenzten pneumatischen Fläche in axialer Projektionsrichtung übereinstimmt.

Die Erfindung ist nicht auf den Bremskraftverstärker gemäß dem gezeichneten Ausführungsbeispiel beschränkt. Es ist beispielsweise denkbar, einen fremdangesteuerten Bremskraftverstärker, wie er zur Darstellung des sogenannten Bremsassistenten benutzt wird, mit der beanspruchten Vorrichtung zu versehen.

## Patentansprüche

1. Bremskraftverstärker für Kraftfahrzeuge, mit einem Verstärkergehäuse (1), dessen Innenraum durch eine bewegliche Wand (2) in eine Unterdruckkammer (4) und eine Arbeitskammer (3) unterteilt ist, sowie einem eine auf die bewegliche Wand (2) einwirkende Druckdifferenz steuernden, in einem die bewegliche Wand (2) tragenden Steuergehäuse (5) angeordneten Steuerventil (12), das aus mindestens zwei konzentrisch zueinander angeordneten Dichtsitzen (15,16) sowie einem Ventilkörper (10) besteht, welcher im Steuergehäuse (5) einen pneumatischen Raum (17) begrenzt, der mit dem in der Arbeitskammer (3) herrschenden pneumatischen Druck beaufschlagbar ist, wobei der Ventilkörper (10) mit zwei Dichtlippen (50,51) unterschiedlichen Durchmessers versehen ist, welche den pneumatischen Raum (17) im Steuergehäuse (5) begrenzen, **dadurch gekennzeichnet, daß** die Dichtlippen (50,51) ferner in axialer Richtung weitgehend mit den Dichtsitzen (15,16) fluchten, so daß die von der Durchmesserdifferenz beeinflußte wirksame pneumatische Fläche des Raumes (17) im wesentlichen mit der zwischen den beiden Dichtsitzen (15,16) begrenzten pneumatischen Fläche übereinstimmt.

2. Bremskraftverstärker nach Anspruch 1, **dadurch gekennzeichnet, daß** dem Ventilkörper (10) mit den Dichtlippen (50,51) ein Führungsteil (34) mit zwei konzentrischen Führungsstutzen (52,53) zugeordnet ist.

3. Bremskraftverstärker nach Anspruch 2, **dadurch gekennzeichnet, daß** der Ventilkörper (10) mit den Dichtlippen (50,51) und das Führungsteil (34) mit den Führungsstutzen (52,53) im Querschnitt U-förmig sind.

4. Bremskraftverstärker nach Anspruch 2 oder 3, **dadurch gekennzeichnet, daß** die radial äußere Dichtlippe (51) zwischen den beiden Führungsstutzen (52,53) angeordnet ist und an der Kontaktfläche des radial äußeren Führungsstutzens (53) anliegt.

5. Bremskraftverstärker nach Anspruch 2 oder 3, **dadurch gekennzeichnet, daß** die radial innere Dichtlippe (50) von radial innen an der Kontaktfläche des radial inneren Führungsstutzens (52) anliegt.

6. Bremskraftverstärker nach einem oder mehreren der vorhergehenden Ansprüche, **dadurch gekennzeichnet, daß** die Dichtlippen (50,51) an axial vorstehenden Schenkeln (54,55) des Ventilkörpers (10) angeordnet sind.

7. Bremskraftverstärker nach Anspruch 6, **dadurch gekennzeichnet, daß** beide Dichtlippen (50,51) bezüglich der Schenkel (54,55) nach radial schräg außen abstehen.

## Claims

1. Brake force booster for automotive vehicles with a booster housing (1) having its interior space subdivided by a movable wall (2) into a vacuum chamber (4) and a working chamber (3), and with a control valve (12) which controls a pressure differential that acts upon the movable wall (2) and is accommodated in a control housing (5) that carries the movable wall (2), the said control valve being comprised of at least two concentrically arranged sealing seats (15, 16) and a valve member (10) which defines in the control housing (5) a pneumatic chamber (17) that can be acted upon by the pneumatic pressure that prevails in the working chamber (3), wherein the valve member (10) includes two sealing lips (50, 51) of different diameters which define the pneumatic chamber (17) in the control housing (5),
**characterized in that** the sealing lips (50, 51) largely align with the sealing seats (15, 16) in an axial direction so that the effective pneumatic surface of the chamber (17) which is influenced by the difference in diameters is generally in conformity with the pneumatic surface defined between the two sealing seats (15, 16).

2. Brake force booster as claimed in claim 1,
**characterized in that** a guide element (34) with two concentric guiding sockets (52, 53) is associated with the valve member (10) with the sealing lips (50, 51).

3. Brake force booster as claimed in claim 2,
**characterized in that** the valve member (10) with the sealing lips (50, 51) and the guide element (35) with the guiding sockets (52, 53) have a U-shaped cross-section.

4. Brake force booster as claimed in claim 2 or 3,
**characterized in that** the radially outward sealing lip (51) is arranged between the two guiding sockets (52, 53) and abuts on the contact surface of the radially outward guiding socket (53).

5. Brake force booster as claimed in claim 2 or 3,
**characterized in that** the radially inward sealing lip (50) abuts from radially inwards on the contact surface of the radially inward guiding socket (52).

6. Brake force booster as claimed in any one or more of the preceding claims,
**characterized in that** the sealing lips (50, 51) are arranged on axially projecting legs (54, 55) of the valve member (10).

7. Brake force booster as claimed in claim 6,
**characterized in that** both sealing lips (50, 51) project in a radially transverse outward direction with respect to the legs (54, 55).

## Revendications

1. Servofrein pour véhicules automobiles, comportant un boîtier (1) du servofrein dont le volume intérieur est divisé par une paroi mobile (2) en une chambre sous dépression (4) et une chambre de travail (3), ainsi qu'une soupape de commande (12) qui commande une différence de pression agissant sur la paroi mobile (2), qui est disposée dans un boîtier de commande (5) portant la paroi mobile (2) et qui est constituée d'au moins deux sièges d'étanchéité (15, 16) disposés concentriquement l'un à l'autre ainsi que d'un corps de soupape (10), lequel limite, dans le boîtier de commande (5), un espace pneumatique (17) qui peut recevoir la pression pneumatique régnant dans la chambre de travail (3), le corps de soupape (10) étant pourvu de deux lèvres d'étanchéité (50, 51) de diamètre différent qui limitent l'espace pneumatique (17) dans le boîtier de commande (5), **caractérisé en ce que** les lèvres d'étanchéité (50, 51) sont en outre largement alignées axialement avec les sièges d'étanchéité (15, 16), de sorte que la surface pneumatique utile de l'espace (17), influencée par la différence de diamètre, coïncide sensiblement avec la surface pneumatique limitée entre les deux sièges d'étanchéité (15, 16).

2. Servofrein selon la revendication 1, **caractérisé en ce qu'**un élément de guidage (34) avec deux tubulures de guidage (52, 53) est associé au corps de soupape (10) avec les lèvres d'étanchéité (50, 51).

3. Servofrein selon la revendication 2, **caractérisé en ce que** le corps de soupape avec les lèvres d'étanchéité (50, 51) et l'élément de guidage (34) avec les tubulures de guidage (52, 53) ont une section transversale en U.

4. Servofrein selon la revendication 2 ou 3, **caractérisé en ce que** la lèvre d'étanchéité (51) extérieure radialement est disposée entre les deux tubulures de guidage (52, 53) et s'applique contre la surface de contact de la tubulure de guidage (53) extérieure radialement.

5. Servofrein selon la revendication 2 ou 3, **caractérisé en ce que** la lèvre d'étanchéité (50) intérieure radialement s'applique radialement de l'intérieur contre la surface de contact de la tubulure de guidage (52) intérieure radialement.

6. Servofrein selon une ou plusieurs des revendications précédentes, **caractérisé en ce que** les lèvres d'étanchéité (50, 51) sont disposées sur des branches (54, 55) dépassant axialement du corps de soupape (10).

7. Servofrein selon la revendication 6, **caractérisé en ce que** les deux lèvres d'étanchéité (50, 51) dépassent radialement et obliquement à l'extérieur par rapport aux branches (54, 55).
